# EUROPEAN PATENT APPLICATION

(11) **EP 2 091 180 A1**
(43) Date of publication of application: **19.08.2009**
(21) Application number: 08835192.9
(22) Date of filing: 24.09.2008
(51) Int. Cl.: H04L 12/24

(54) **METHOD, SYSTEM AND DEVICE FOR REALIZING SWITCHING BETWEEN MAIN AND SPARE**

(30) Priority: 25.09.2007 CN 200710151867
(71) Applicant: Huawei Technologies Co., Ltd., Longgang District, Shenzhen Guangdong 518129 (CN)
(72) Inventor: WU, Jimin, Shenzhen Guangdong 518129 (CN); CAI, Liyuan, Shenzhen Guangdong 518129 (CN)
(74) Representative: Pfenning, Meinig & Partner GbR
(86) International application number: PCT/CN2008/072494
(87) International publication number: WO 2009/043281

(57) **Abstract**

A method for implementing an active/standby switchover includes: sending received data to an active device corresponding to a physical IP address in a mapping relation with a preset communication identification (ID); changing the physical IP address of the active device in the mapping relation with the communication ID to the physical IP address of a standby device for switchover when determining that the system needs to perform the active/standby switchover; sending the received data to the standby device corresponding to the physical IP address in the mapping relation with the preset communication ID after the system performs the active/standby switchover. A system and device for implementing an active/standby switchover are also disclosed. With the method, system, and device provided by the present invention, a long interruption of ongoing services is prevented when the active/standby switchover is performed.

## Description

### Field of the Invention

The present invention relates to a mobile communication technology, and in particular, to a method, system, and device for implementing active/standby switchover.

### Background of the Invention

There are increasing requirements for the reliability of a communication system currently. In the conventional technology, the active/standby switchover technology is adopted to ensure the reliability of a communication system. That is, two devices (namely, an active device and a standby device) are configured. Normally, the active device provides services for the system. When the active device is faulty, the system switches over to the standby device, so that the standby device provides services for the system. Here, the active/standby switchover is a relative concept. During actual applications, two devices are backed up mutually.

The active and standby devices share the same floating IP address, which means that a specific IP address is bound to a device that is working, such as a network adapter on the active device; when the active device is faulty, the floating IP address occupied by the active device is released and bound to a network adapter on the standby device.

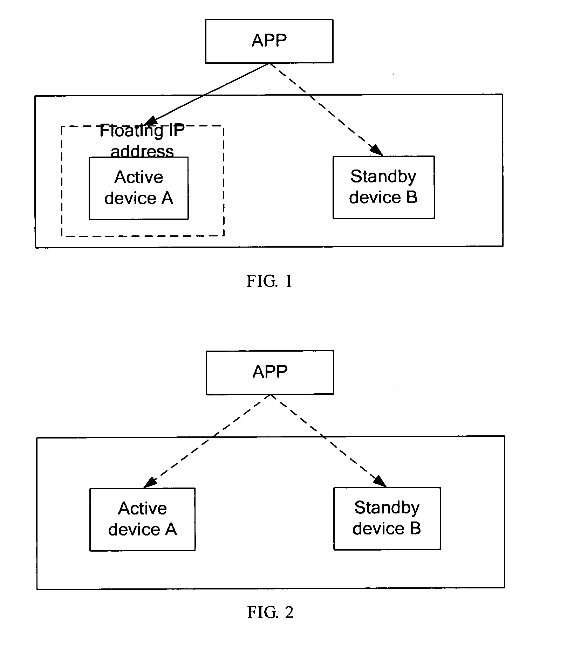

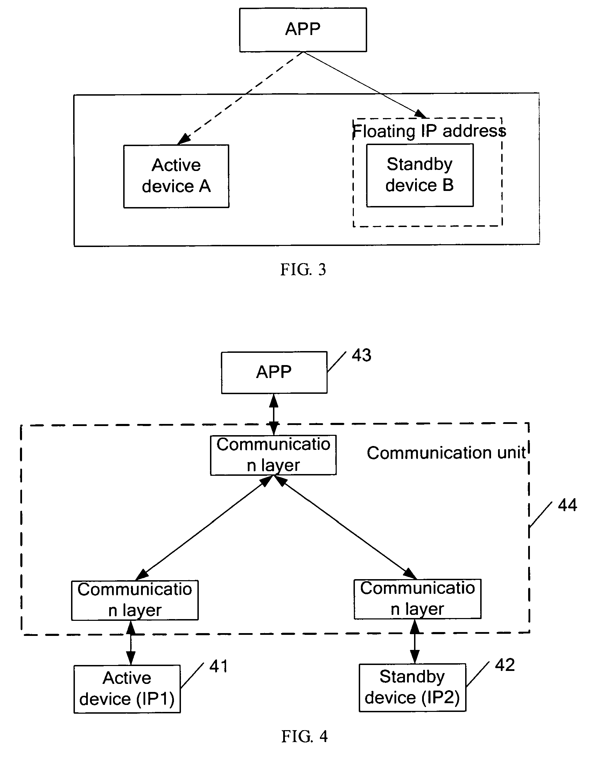

FIG. 1-FIG 3 show a conventional active/standby switchover solution adopting the floating IP technology. As shown in FIG. 1, normally, active device A occupies the floating IP address, and the data sent to the floating IP address by an application device (APP) is sent to active device A. After detecting that active device A is faulty, the system performs the process shown in FIG. 2 and FIG 3. As shown in FIG. 2, active device A releases the floating IP address. In this case, the system is in the offline state and cannot work normally. As shown in FIG. 3, after active device A releases the floating IP address successfully, standby device B occupies the floating IP address.

In the process of implementing the present invention, the inventor finds at least the following defects in the conventional technology.

The foregoing method can be used to implement the active/standby switchover, but the physical environment setting needs to be modified while the active device releases the floating IP address and the standby device occupies the floating IP address. As a result, the currently ongoing services are interrupted. In addition, modifying the physical environment setting takes a long time generally. With regard to a real-time communication system, it is unacceptable that the normal running of services is affected for a long time.

### Summary of the Invention

Embodiments of the present invention provide a method for implementing the active/standby switchover to prevent the ongoing services from a long interruption when the active/standby switchover is performed.

Embodiments of the present invention provide a system for implementing the active/standby switchover to prevent the ongoing services from a long interruption when the active/standby switchover is performed.

Embodiments of the present invention provide a device for implementing the active/standby switchover to prevent the ongoing services from a long interruption when the active/standby switchover is performed.

The technical solution in embodiments of the present invention is as follows:

A method for implementing an active/standby switchover includes:

sending received data to an active device corresponding to a physical IP address in a mapping relation with a preset communication identification (ID);

changing the physical IP address of the active device in the mapping relation with the communication ID to a physical IP address of a standby device for switchover when determining that the system needs to perform the active/standby switchover; and

sending the received data to the standby device corresponding to the physical IP address in the mapping relation with the preset communication ID after the system performs the active/standby switchover.

A system for implementing an active/standby switchover includes a standby device, an application device (APP), and a communication unit, where:

the APP is adapted to send data to the communication unit;

the communication unit is adapted to send the received data from the APP to the standby device corresponding to a physical IP address in a mapping relation with a preset communication ID; and

the standby device is adapted to receive the data from the communication unit.

A device for implementing an active/standby switchover includes a receiving unit and a sending unit, where:

the receiving unit is adapted to receive data sent to a standby device corresponding to a physical IP address in a mapping relation with a preset communication ID when the system performs the active/standby switchover; and

the sending unit is adapted to send the received data to the standby device.

In the technical solution of the present invention, the system automatically obtains a target device to which data is to be sent and sends data to the target device according to a mapping relation between a preset communication ID and a physical IP address; the system sends the data that is sent to the communication ID to a device corresponding to the physical IP address that is currently mapped to the communication ID according to the mapping relation of the communication ID when performing the active/standby switchover. Different from the conventional active/standby switchover solution that adopts the floating IP technology, the solution of the present invention changes only the mapping relation between the communication ID and the physical IP address of a device when the active/standby switchover is performed. The setting of the physical environment does not need to be changed. Thus, a long interruption of ongoing services is prevented.

### Brief Description of the Drawings

FIG. 1-FIG. 3 show the conventional active/standby switchover solution that adopts the floating IP technology;

FIG. 4 shows a structure of a system for implementing an active/standby switchover in an embodiment of the present invention;

FIG. 5 shows a structure of a device for implementing an active/standby switchover in an embodiment of the present invention; and

FIG. 6 is a flowchart of a method for implementing an active/standby switchover in an embodiment of the present invention.

### Detailed Description of the Invention

To prevent a long interruption of ongoing services during an active/standby switchover due to the floating IP technology in the conventional technology, embodiments of the present invention provide a new solution to the active/standby switchover. That is, when the system performs the active/standby switchover, it sends the received data to a standby device corresponding to the physical IP address in a mapping relation with the preset communication identification (ID).

The specific implementation can be as follows: establishing a mapping relation between the preset communication ID and the physical IP address of an active device or the physical IP address of a standby device in advance; at a point of time during the communication, the communication ID in the mapping relation with the physical IP address of the active device or the physical IP address of the standby device is uniquely mapped to either the physical IP address of the active device or the physical IP address of the standby device. At this time, a mapping relation between the communication ID and the physical IP address of the active device or the physical IP address of the standby device is established. That is, the physical IP address of the active device and the physical IP address of the standby device are relatively stable. The subsequent process is as follows: receiving the data that is sent to the communication ID; sending the received data to a device corresponding to the physical IP address in the mapping relation with the communication ID; changing the physical IP address in the mapping relation with the communication ID to the physical IP address of a device for switchover and sending the data that is sent to the communication ID to the device corresponding to the new physical IP address when the system needs to perform the active/standby switchover.

To better explain the objectives, technical solution, and advantages of the present invention, the following describes embodiments of the present invention in detail with reference to the accompanying drawings.

FIG. 4 shows a structure of a system for implementing an active/standby switchover in an embodiment of the present invention. As shown in FIG. 4, the system includes a standby device 42, an APP 43, and a communication unit 44.

The APP 43 is adapted to send data to the communication unit 44.

The communication unit 44 is adapted to send the received data from the APP 43 to the standby device 42 corresponding to the physical IP address in a mapping relation with the preset communication ID.

The standby device 42 is adapted to receive data from the communication unit 44.

The system further includes an active device 41, which is adapted to receive data from the communication unit 44.

The communication unit 44 is further adapted to send the received data to the active device 41 corresponding to the physical IP address in the mapping relation with the communication ID before the system performs the active/standby switchover, and change the physical IP address in the mapping relation with the communication ID when determining that the system needs to perform the active/standby switchover; that is, the object mapped to the communication ID is the physical IP address of the active device 41 before the active/standby switchover, and the object mapped to the communication ID is changed to the physical IP address of the standby device 42 after the active/standby switchover.

The communication unit 44 stores the mapping relation between the preset communication ID and the physical IP address of the active device 41 and the physical IP address of the standby device 42 in advance; at a point of time during the communication, the communication ID is uniquely mapped to either the physical IP address of the active device 41 and the physical IP address of the standby device 42.

In embodiments of the present invention, the communication unit 44 is composed of three communication layers that correspond to the APP 43, the active device 41, and the standby device 42.

The process of establishing a mapping relation between the communication ID and the physical IP address of the active device 41 and the physical IP address of the standby device 42 in advance can be performed at any of the three communication layers; after the mapping relation is established, the three communication layers maintain consistency of stored information automatically by exchanging information. Therefore, in embodiments of the present invention, the three communication layers store the mapping relation between the preset communication ID and the physical IP address of the active device 41 and the physical IP address of the standby device 42; when detecting that the active/standby switchover needs to be performed for a certain reason (for example, the active device is faulty), the system requests the communication unit 44 to modify the currently stored mapping relation by exchanging information with the communication unit 44 (that is, before the active/standby switchover, the object mapped to the communication ID is the physical IP address of the active device 41, and after the active/standby switchover, the object mapped to the communication ID is changed to the physical IP address of the standby device 42). Accordingly, according to the presetting, a communication layer of the communication unit 44 shown in FIG. 4 changes the physical IP address of a device (such as the physical IP address of the active device 41) in the mapping relation with the communication ID to the physical IP address of the standby device 42; at the same time, the three communication layers update information to maintain consistency.

Alternatively, one of the three communication layers may function as a processing center; all settings and changes are performed in the communication layer; and the communication layer notifies other communication layers of the changes in time, thus maintaining consistency of the information stored at each communication layer.

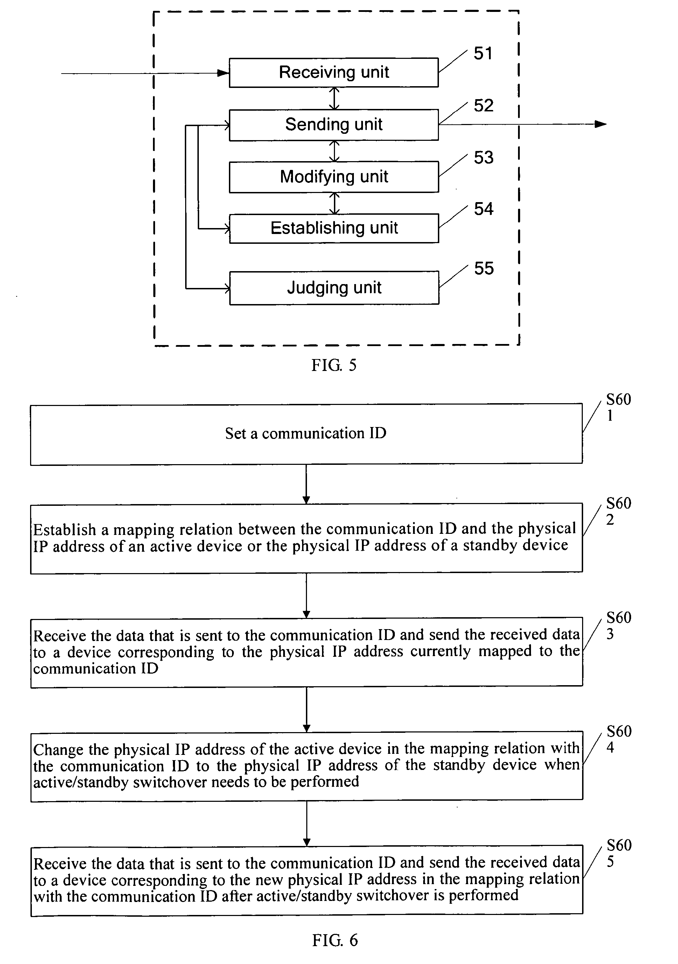

FIG. 5 shows a structure of a device for implementing an active/standby switchover in an embodiment of the present invention. As shown in FIG. 5, the device includes a receiving unit 51 and a sending unit 52.

The receiving unit 51 is adapted to receive the data that is sent to the standby device 42 corresponding to the physical IP address in a mapping relation with the preset communication ID when the system performs the active/standby switchover.

The sending unit 52 is adapted to send the received data to the standby device 42.

The sending unit is further adapted to send the received data to the active device 41 corresponding to the physical IP address in the mapping relation with the communication ID before the system performs the active/standby switchover.

The device further includes a modifying unit 53, which is adapted to change the physical IP address of the active device 41 in the mapping relation with the communication ID to the physical IP address of the standby device 42 for switchover when the system needs to perform the active/standby switchover.

In addition, the device further includes an establishing unit 54, which is adapted to establish the mapping relation between the preset communication ID and the physical IP address of the active device 41 and the physical IP address of the standby device 42; at a point of time during the communication, the communication ID is uniquely mapped to either the physical IP address of the active device 41 and the physical IP address of the standby device 42. The sending unit 52 obtains a physical IP address currently mapped to the communication ID by querying the establishing unit 54, and then sends the data from the receiving unit 51 to a device corresponding to the obtained physical IP address.

The device further includes a judging unit 55, which is adapted to judge whether a device that sends data to the receiving unit 51 is connected to a device that corresponds to the obtained physical IP address; if the two devices are connected to each other, notify the sending unit 52 of using the original connection to send data to the device that corresponds to the obtained physical IP address; if the two devices are not connected to each other, establish a connection between them and notify the sending unit 52 of using the new connection to send data to the device that corresponds to the obtained physical IP address.

On the basis of the foregoing system and device, FIG. 6 is a flowchart of a method for implementing an active/standby switchover in an embodiment of the present invention. This embodiment is implemented according to the system shown in FIG. 4; as shown in FIG. 6, the implementation process includes the following steps:

Step S601: Set a communication ID.

According to the current actual requirements of the system, one or more communication IDs are set at a communication layer. Each communication ID corresponds to only one actual physical IP address at a point of time, but different communication IDs can correspond to the same physical IP address. A set communication ID can be represented by a number, such as 1, 2, ..., and N (N indicates the quantity of communication IDs). A set communication ID corresponds to a group of active devices and standby devices. The step of sending data to an active device can be regarded as sending data to the communication ID.

Embodiments of the present invention use only one communication ID. Therefore, the case of multiple communication IDs is unrelated to the embodiment. For ease of description, assume that only one communication ID is set in the embodiment.

Step S602: Establish a mapping relation between the communication ID and the physical IP address of an active device or the physical IP address of a standby device.

In this step, the mapping relation between the communication ID and the physical IP address of the active device and the physical IP address of the standby device is established at the communication layer, but at a point of time during the communication, the communication ID is uniquely mapped to either the physical IP address of the active device and the physical IP address of the standby device. If the currently mapped physical IP address is the physical IP address of the active device (IP1), the relation is as follows: ID->IP1. The method for establishing a mapping relation is included in the conventional technology and therefore not detailed herein.

The process from step S601 to step S602 can be performed at one of the three communication layers shown in FIG. 4. Assume that step S60 and step S602 are performed in a communication layer that corresponds to an APP.

Step S603: Receive the data that is sent to the communication ID and send the received data to a device corresponding to the physical IP address currently mapped to the communication ID.

The APP at the service layer requests the corresponding communication layer to send data; the communication layer corresponding to the APP obtains the physical IP address (IP1) currently mapped to the communication ID according to the preset mapping relation of the communication ID; after obtaining the required physical IP address, the communication layer judges whether the APP is connected to an active device corresponding to IP1; if the APP is connected to the active device, the communication layer uses the established connection to send the data from the APP to the active device; if the APP is not connected to the active device, the communication layer establishes a connection between the APP and the active device, and then sends the data from the APP to the active device.

In this embodiment, the method for judging whether the APP is connected to the active device may be querying for the records of the communication layer. If the APP is connected to the active device, the communication layer corresponding to the APP and the active device will save the corresponding communication ID as a record. Whether the APP is connected to the active device can be known by querying whether the corresponding record exists.

Step S604: When the active/standby switchover needs to be performed, change the physical IP address of the active device in the mapping relation with the communication ID to the physical IP address of the standby device. That is, the object mapped to the communication ID is the physical IP address of the active device before the active/standby switchover, and the object mapped to the communication ID is changed to the physical IP address of the standby device after the active/standby switchover (after the active/standby switchover, the object mapped to the communication ID is changed).

At a point of time, when detecting that the active/standby switchover needs to be performed (so that the standby device provides services for the system) for a certain reason (for example, the active device is faulty), the system changes the physical IP address of the active device in the mapping relation with the communication ID to the physical IP address of the standby device for switchover. In this embodiment, IP1 currently mapped to the communication ID is changed to IP2. The corresponding formula is as follows: During the active/standby switchover, communication ID -> physical IP address (IP1) of the active device is changed to communication ID -> physical IP address (IP1) of the standby device.

According to the above embodiment of the invention, only the mapping relation at the communication layer is changed during the active/standby switchover in this step. The change of the physical environment is not required.

Step S605: Receive the data that is sent to the communication ID and send the received data to a device corresponding to the new physical IP address in the mapping relation with the communication ID after the active/standby switchover is performed.

The APP at the service layer requests the corresponding communication layer to send data; the communication layer corresponding to the APP obtains the physical IP address (IP2) currently mapped to the communication ID according to the changed mapping relation; after obtaining the required physical IP address, the communication layer judges whether the APP is connected to the standby device corresponding to IP2; if the APP is connected to the standby device, the communication layer uses the established connection to directly send the data from the APP to the standby device; if the APP is not connected to the standby device, the communication layer establishes a connection between the APP and the standby device, and then sends the data from the APP to the standby device.

In the subsequent process, the system repeats steps S604-S605 for another active/standby switchover.

According to the technical solution of embodiments of the present invention, the service layer is separated from the communication layer. A device at the service layer, such as an APP, needs to know only the target communication ID to which data is to be sent and sends data to the communication ID without knowing the specific communication protocol. The communication layer automatically obtains the target device to which data is to be sent and sends data to the target device according to the mapping relation between the preset communication ID and the physical IP address. During the active/standby switchover, the communication layer only needs to change the physical IP address of the active device in the mapping relation with the communication ID to the physical IP address of the standby device for switchover. According to the changed mapping relation, the communication layer sends the data that is sent to the communication ID to the device corresponding to the new physical IP address.

Different from the conventional active/standby switchover solution that adopts the floating IP technology, the solution of the present invention changes only the mapping relation between the communication ID and the physical IP address of a device when the active/standby switchover is performed. The setting of the physical environment does not need to be changed. Thus, a long interruption of ongoing services is prevented, and development of real-time services is facilitated.

Through the foregoing embodiments, it is understandable to those skilled in the art that the embodiments of the present invention may be implemented through software and a necessary general hardware platform or through hardware only. However, in most cases, software and a general hardware platform are preferred. Based on such understanding, the technical solution of the present invention or contributions to the conventional technology may be embodied by a software product. The software product is stored in a storage medium and incorporates several instructions to instruct a computer device, for example, a personal computer, a server, or a network device, to execute the method provided by each embodiment of the present invention.

Although the present invention has been described through several exemplary embodiments, the invention is not limited to such embodiments. It is apparent that those skilled in the art can make various modifications and variations to the invention without departing from the spirit and scope of the invention. The present invention is intended to cover such modifications and variations provided that they fall in the scope of protection defined by the following claims or their equivalents.

## Claims

1. A method for implementing an active/standby switchover, comprising:
sending received data to an active device corresponding to a physical IP address in a mapping relation with a preset communication identification, ID;
changing the physical IP address of the active device in the mapping relation with the communication ID to a physical IP address of a standby device for switchover when determining that a system needs to perform the active/standby switchover; and
sending the received data to the standby device corresponding to the physical IP address in the mapping relation with the preset communication ID after the system performs the active/standby switchover.

2. The method of claim 1, before the method is executed, further comprising:
establishing the mapping relation between the communication ID and the physical IP address of the active device or the physical IP address of the standby device.

3. The method of claim 1, before the received data is sent to the standby device corresponding to the physical IP address in the mapping relation with the preset communication ID, further comprising:
judging whether a device that sends the data to the communication ID is connected to the standby device; and
if the device is connected to the standby device, using the original connection to send the received data to the standby device; and if the device is not connected to the standby device, establishing a connection between them and sending the received data to the standby device by using the new connection.

4. A system for implementing an active/standby switchover, comprising a standby device, an application device, APP, and a communication unit, wherein:
the APP is adapted to send data to the communication unit;
the communication unit is adapted to send the received data from the APP to the standby device corresponding to a physical IP address in a mapping relation with a preset communication ID; and
the standby device is adapted to receive the data from the communication unit.

5. The system of claim 4, further comprising an active device, which is adapted to receive the data from the communication unit, wherein:
the communication unit is further adapted to send the received data to the active device corresponding to the physical IP address in the mapping relation with the communication ID before the system performs the active/standby switchover, and change the physical IP address of the active device in the mapping relation with the communication ID to the physical IP address of the standby device for switchover when determining that the system needs to perform the active/standby switchover.

6. A device for implementing an active/standby switchover, comprising a receiving unit and a sending unit, wherein:
the receiving unit is adapted to receive data sent to a standby device corresponding to a physical IP address in a mapping relation with a preset communication ID when a system performs the active/standby switchover; and
the sending unit is adapted to send the received data to the standby device.

7. The device of claim 6, further comprising:
an establishing unit, which is adapted to establish the mapping relation between the communication ID and the physical IP address of the active device or the physical IP address of the standby device.

8. The device of claim 6, wherein the sending unit is further adapted to send the received data to the active device corresponding to the physical IP address in the mapping relation with the communication ID before the system performs the active/standby switchover; and
the device further comprises a modifying unit, adapted to change the physical IP address of the active device in the mapping relation with the communication ID to the physical IP address of the standby device for switchover when the system needs to perform the active/standby switchover.

9. The device of claim 6, further comprising:
a judging unit, adapted to: judge whether a device that sends data to the receiving unit is connected to the standby device; if the device is connected to the standby device, notify the sending unit of using the original connection to send data to the standby device; or if the device is not connected to the standby device, establish a connection between them and send data to the standby device by using the new connection.
